# EUROPÄISCHE PATENTSCHRIFT

(11) **EP 2 346 610 B1**
(45) Veröffentlichungstag und Bekanntmachung des Hinweises auf die Patenterteilung: **18.07.2018**
(21) Anmeldenummer: 09764215.1
(22) Anmeldetag: 16.11.2009
(51) Int. Cl.: G01N 35/02, G01N 35/04

(54) **AUTOMATISIERTE ANALYSEVORRICHTUNG MIT EINEM DREHBAREN KARUSSELL FÜR VERSCHIEDENE FLÜSSIGKEITSBEHÄLTER**
AUTOMATED ANALYSIS DEVICE WITH A ROTATING CAROUSEL FOR DIFFERENT LIQUID CONTAINERS
DISPOSITIF D ANALYSE AUTOMATIQUE DOTÉ D UN CARROUSEL ROTATIF DESTINÉ À DIFFÉRENTS RÉCIPIENTS POUR LIQUIDES

(30) Priorität: 18.11.2008 DE 102008058062
(43) Veröffentlichungstag der Anmeldung: 27.07.2011
(73) Patentinhaber: Diasys Technologies S.A.R.L., 34790 Grabels (FR)
(72) Erfinder: SCHENK, Roland, 67281 Kirchheim (DE)
(74) Vertreter: WSL Patentanwälte Partnerschaft mbB
(86) Internationale Anmeldenummer: PCT/EP2009/065249
(87) Internationale Veröffentlichungsnummer: WO 2010/057858

(56) Entgegenhaltungen:
- EP-A1- 1 767 949
- WO-A2-03/031988
- US-A- 5 051 238
- US-A- 5 814 277
- US-B1- 6 335 166

## Beschreibung

Die vorliegende Erfindung betrifft eine Vorrichtung für die automatisierte Analyse von Flüssigkeiten mit einem Karussell für Flüssigkeitsbehälter, wobei das Karussell ein um eine zentrale Rotationsachse drehbares Reagenzien- und/oder Probenkarussell umfasst, wobei das Reagenzien-/Probenkarussell Reagenzien- und/oder Probenbehälterfächer zur Aufnahme von Reagenzien- und/oder Probenbehältern aufweist. Darüber hinaus betrifft die vorliegende Erfindung ein entsprechendes Analysenkarussell für eine solche Vorrichtung.

Im Rahmen der zunehmenden Automatisierung auf dem Gebiet der medizinischen und veterinärmedizinischen Diagnostik wurden u.a. Vorrichtungen für die automatisierte Analyse von Flüssigkeiten, sogenannte Analysatoren, entwickelt, die ein für die Durchführung einer Analyse erforderliches Reagenz aus einem Reagenzienbehälter entnehmen und mit einer Probe zum Zwecke der Durchführung der Analyse in einem Reaktionsgefäß vereinigen können. Hierfür weisen die Analysatoren häufig ein Karussell auf, in dem entweder Aufnahmebereiche für Reagenzienbehälter oder Aufnahmebereiche für Probenbehälter vorgesehen sind. In besonderen Analysatorenkarussells sind sowohl Aufnahmebereiche für Reagenzienbehälter als auch Aufnahmebereiche für Probenbehälter vorgesehen. Solche Karussells werden üblicherweise von einer in dem Analysator vorgesehenen Antriebsvorrichtung zur Ausführung einer Drehbewebung des Karussells angetrieben.

Die Entnahme von Reagenz bzw. Probe und das Überführen in ein Reaktionsgefäß wird üblicherweise von einer automatischen Pipettiervorrichtung vorgenommen. Eine solche automatische Pipettiervorrichtung umfasst in der Regel einen Pipettierarm, an dem eine Pipettiernadel angeordnet ist, die mit einer Pumpeinheit verbunden ist, mit der eine Flüssigkeit in die Pipettiernadel aufgezogen und aus der Pipettiernadel auch wieder ausgestoßen werden kann. Ein solcher Pipettierarm ist in der Regel so ausgestaltet, dass mit dem Pipettierarm die Pipettiernadel über einen Arbeitsbereich bewegt werden kann, in welchem Arbeitsbereich die Reagenzienbehälter, Probenbehälter und/oder Reaktionsgefäße (z. B. Küvetten) stationär angeordnet sind oder durch z. B. ein Karussell vorübergehend bereitgestellt werden.

Zwischen den einzelnen Pipettiervorgängen ist es regelmäßig erforderlich, die Pipettiernadel der automatischen Pipettiervorrichtung innen und außen zu reinigen. Hierfür wird die Pipettiernadel meist in eine Spülflüssigkeit eingetaucht, wobei eine bestimmte Menge an Spülflüssigkeit in die Pipettiernadel aufgezogen wird. Anschließend wird die Pipettiernadel aus der Spülflüssigkeit herausgezogen und über einem Abfallbehälter bzw. einem Abfluss entleert und abtropfen gelassen bzw. abgestreift.

Üblicherweise enthalten Analysatoren außerdem eine Messvorrichtung zum Bestimmen einer physikalischen oder chemischen Größe eines in einem Reaktionsgefäß angesetzten Reaktionsgemisches. Das Reaktionsgefäß kann z. B. eine Küvette sein, die im Strahlengang eines in dem Analysator angeordneten Photometers angeordnet ist oder eingebracht werden kann.

Darüber hinaus umfassen Analysatoren in der Regel wenigstens eine Steuerungseinheit zum Steuern der Bewegungen des Pipettierarms, der Pumpeinheit, der Pipettiernadel, der Hubsäule und/oder des Karussells, sowie eine Datenverarbeitungsvorrichtung zum Einrichten und Ausführen eines Analysenprogramms sowie zum Verarbeiten und Ausgeben einer gemessenen physikalischen oder chemischen Größe.

Viele Proben und viele Reagenzien müssen bei einer bestimmten Temperatur gehalten werden, damit die darin enthaltenen Stoffe stabil bleiben. Üblicherweise werden Proben und Reagenzien gekühlt aufbewahrt und werden erst kurz vor der Durchführung eines Analysenlaufs in den Analysator eingestellt.

Andererseits laufen viele Reaktionen in dem aus Reagenzien und Proben erzeugten Reaktionsgemisch nur bei bestimmten Temperaturen in der gewünschten Weise und mit einer bestimmten Geschwindigkeit ab, so dass es gewünscht sein kann, die Reaktionsgefäße und das darin enthaltene Reaktionsgemisch auf eine bestimmte Temperatur zu bringen, die möglicherweise mehr oder weniger deutlich von der optimalen Aufbewahrungstemperatur für Reagenzien und Proben abweicht. Es besteht daher ein Bedarf nach einer Vorrichtung für die automatisierte Analyse von Flüssigkeiten mit einem Reagenzien- und/oder Probenkarussell und mit einem Bereich, in dem Reaktionsgefäße angeordnet sind, wobei die Reaktionsgefäße und die darin enthaltenen Reaktionsgemische unabhängig und abweichend von der optimalen Aufbewahrungstemperatur der Reagenzien bzw. Proben temperierbar sein sollen.

EP 1 767 949 A1 beschreibt eine Analysevorrichtung mit einem konzentrisch angeordnetem Reagenzien- und Reaktionskarussell, welche durch eine wärmeisolierende Schicht voneinander getrennt sind.

WO 03/031988 A2 beschreibt eine Analysevorrichtung, bei der ein Probenbereich, ein Reagenzienbereich und ein Reaktionsgefäßbereich konzentrisch angeordnet sind. Diese sind jedoch weder durch eine isolierende Schicht getrennt noch sind sie trennbar miteinander verbunden.

Es ist daher die Aufgabe der vorliegenden Erfindung, eine Vorrichtung für die automatisierte Analyse von Flüssigkeiten bereitzustellen, bei der Flüssigkeiten aus einem Reagenzienbehälter oder aus einer Vielzahl von Reagenzienbehältern und/oder aus einem Probenbehälter oder aus einer Vielzahl von Probenbehältern entnommen werden können und in Reaktionsgefäßen miteinander gemischt werden können, wobei die Reaktionsgefäße und die darin enthaltenen Reaktionsgemische unabhängig und abweichend von den Reagenzien bzw. Proben temperierbar sein sollen. Der Bereich, in dem die Reagenzienbehälter und/oder die Probenbehälter angeordnet sind und der Bereich, in dem die Reaktionsgefäße angeordnet sind, sollen möglichst platzsparend gestaltet sein. Das Ziel ist, auf so wenig Raum wie möglich eine oder mehrere Proben mit einem oder mehreren Reagenzien in Reaktionsgefäßen mischen und die daraus resultierenden Reaktionsgemische analysieren zu können.

Diese Aufgabe wird gelöst durch eine Vorrichtung für die automatisierte Analyse von Flüssigkeiten, wie sie eingangs beschrieben wurde, wobei das Flüssigkeitsbehälterkarussell dieser Vorrichtung dadurch gekennzeichnet ist, dass es zusätzlich ein konzentrisch um die Rotationsachse angeordnetes Reaktionsgefäßkarussell mit Reaktionsgefäßfächern zur Aufnahme von Reaktionsgefäßen aufweist, wobei zwischen dem Reagenzien- und/oder Probenkarussell und dem Reaktionsgefäßkarussell eine wärmeisolierende Schicht vorgesehen ist.

Bei einigen Ausführungsformen sind die Fächer für die Reagenzien- bzw. Probenbehälter und/oder die Reaktionsgefäßfächer in dem Flüssigkeitsbehälterkarussell radiär angeordnet. Vorzugsweise sind die Fächer für die Reagenzien- bzw. Probenbehälter in einem zentralen Bereich angeordnet und die Reaktionsgefäßfächer außerhalb dieses Bereiches. Die Anordnung kann jedoch auch genau andersherum erfolgen.

Die wärmeisolierende Schicht besteht zweckmäßigerweise aus einem Material mit schlechten Wärmeleitfähigkeitseigenschaften. Bevorzugt liegt die Wärmeleitfähigkeit λ des Materials bei höchstens 0,5 W/(m x K). Besonders bevorzugt liegt die Wärmeleitfähigkeit λ des Materials bei höchstens 0,1 W/(m x K). Noch bevorzugter liegt die Wärmeleitfähigkeit λ des Materials bei höchstens 0,05 W/(m x K).

Vorzugsweise hat die wärmeisolierende Schicht eine Dicke von wenigstens 1 mm. Bevorzugt liegt die Dicke der wärmeisolierenden Schicht in dem Bereich von 1 mm bis 10 mm. Besonders bevorzugt liegt die Dicke der wärmeisolierenden Schicht in dem Bereich von 1 mm bis 5 mm. Noch bevorzugter liegt die Dicke der wärmeisolierenden Schicht in dem Bereich von 1 mm bis 3 mm.

Die zwischen den Karussells vorgesehene wärmeisolierende Schicht kann aus einem wärmeisolierenden Feststoff, einem wärmeisolierenden Flüssigkeitskissen oder einem wärmeisolierenden Gaskissen bestehen. Besonders bevorzugt besteht die zwischen den Karussells vorgesehene wärmeisolierende Schicht aus einem wärmeisolierenden Feststoff.

Der Vorteil der vorliegenden Erfindung liegt darin, dass äußerst platzsparend eine Vielzahl von Reagenzienbehältern, Probenbehältern und Reaktionsgefäßen in einem Flüssigkeitsbehälterkarussell untergebracht werden können und so in den Arbeitsbereich eines Pipettierarms gedreht werden können. Da die Reagenzien und Proben meistens bei einer anderen Temperatur gehalten werden sollen als die aus diesen Flüssigkeiten erzeugten Reaktionsgemische, ist diese platzsparende Anordnung nur dadurch möglich, dass zwischen dem Reagenzien- und/oder Probenkarussell und dem Reaktionsgefäßkarussell eine wärmeisolierende Schicht vorgesehen ist.

Bei einer bevorzugten Ausführungsform sind die Fächer zur Aufnahme der Reaktionsgefäße auf einer anderen Ebene des Flüssigkeitsbehälterkarussells angeordnet als die Fächer zur Aufnahme der Reagenzien- bzw. Probenbehälter. Dadurch, dass die Behälter auf unterschiedlichen Ebenen angeordnet sind, ist die Gefahr des Wärmeaustausches zwischen den unterschiedlich temperierten Flüssigkeitsbehältern noch geringer, zumal zweckmäßigerweise die unterschiedlich temperierten Behälter nicht unmittelbar untereinander angeordnet sind, sondern gegeneinander versetzt.

Auch bei der zuletzt beschriebenen Ausführungsform können die Fächer für die Reagenzien- bzw. Probenbehälter in dem Flüssigkeitsbehälterkarussell in einem zentralen Bereich angeordnet und die Reaktionsgefäßfächer außerhalb dieses Bereiches angeordnet sein und umgekehrt. In jedem Fall sind jedoch die Bereiche, in denen sich die Reagenzien-/Probenfächer befinden, nicht unmittelbar über oder unter dem Bereich, in dem sich die Reaktionsgefäßfächer befinden, angeordnet. Hierdurch wird gewährleistet, dass die Pipettiernadel auf alle Flüssigkeitsbehälter in dem Flüssigkeitsbehälterkarussell zugreifen kann.

Wird ein erfindungsgemäßes Karussell für Flüssigkeitsbehälter in die Vorrichtung für die automatisierte Analyse von Flüssigkeiten (Analysator) eingesetzt, befindet sich die Reagenzien-/Probenkarussellebene vorzugsweise in einem durch eine in dem Analysator vorgesehen Trennvorrichtung räumlich von dem Bereich, in dem sich das Reaktionsgefäßkarussell befindet, abgetrennten Bereich. Diese Abtrennung kann bei der Ausführungsform, bei der Reagenzien- bzw. Probenkarussell und Reaktionsgefäßkarussell auf unterschiedlichen Ebenen angeordnet sind, beispielsweise durch einen Trennboden erfolgen, der eine dem Umfang des Reaktionsgefäßkarussells entsprechende Ausnehmung aufweist, und der nach dem Einsetzen des Flüssigkeitsbehälterkarussells in den Analysator auf der Höhe angeordnet ist, die zwischen der Ebene, auf der das Reagenzien-/Probenkarussell angeordnet ist, und der Ebene, auf der das Reaktionsgefäßkarussell angeordnet ist, liegt. Vorzugsweise ist daher das Reaktionsgefäßkarussell unter der Reagenzien-/Probenkarussellebene angeordnet.

Vorzugsweise sind das Reagenzien-/Probenkarussell und das Flüssigkeitsbehälterkarussell mit einem Abstand zueinander angeordnet, damit im wesentlichen kein Kontakt zwischen den Karussells besteht, um eine Wärmeübertragung von einem Karussell auf das andere Karussell zu vermeiden. In diesem Falle bildet die zwischen den Karussells befindliche Kissen aus Umgebungsluft die wärmeisolierende Schicht. Zur Verbesserung der Stabilität können zwischen den Karussells dieser Ausführungsform punktförmige oder leistenförmige Kontaktflächen vorgesehen sein, die vorzugsweise möglichst klein gehalten werden, um die Wärmeübertragung gering zu halten. Besonders bevorzugt ist zwischen den Karussells dieser Ausführungsform zusätzlich noch eine wärmeisolierende Schicht aus einem wärmeisolierenden Feststoff oder einem wärmeisolierenden Flüssigkeitskissen vorgesehen.

Vorzugsweise ist die wärmeisolierende Schicht in Form einer Isolationsscheibe ausgeführt, die um die Rotationsachse konzentrisch mit dem Reagenzien-/Probenkarussell und dem Reaktionsgefäßkarussell angeordnet ist. Eine solche Isolationsscheibe kann auf der Unterseite des Reagenzien- /Probenkarussells montiert sein oder auf der Oberseite des Reaktionsgefäßkarussells in dem Bereich, in dem das Reagenzien-/Probenkarussell mit dem Reaktionsgefäßkarussell überlappt. Bei einer alternativen Ausführungsform handelt es sich bei der Isolationsscheibe um eine physikalisch separate zwischen Reagenzien-/Probenkarussell und Reaktionsgefäßkarussell anordenbare Isolationsscheibe. Vorzugsweise ist diese Isolationsscheibe lösbar mit dem Reagenzien-/Probenkarussell und/oder dem Reaktionsgefäßkarussell verbindbar.

Bei einer Ausführungsform sind das Reagenzien-/Probenkarussell und das Reaktionsgefäßkarussell Bestandteile eines zusammenhängenden Karussells für Reagenzienbehälter und/oder Probenbehälter und Reaktionsgefäße. Bei einer alternativen Ausführungsform sind das Reagenzien-/Probenkarussell und das Reaktionsgefäßkarussell physikalisch separate, aber lösbar miteinander verbindbare Elemente des Karussells. Bei einer besonderen Ausführungsform besteht das Karussell aus insgesamt drei physikalisch separaten, aber lösbar miteinander verbindbaren Karussells, nämlich einem Reagenzienkarussell, einem Probenkarussell und einem Reaktionsgefäßkarussell.

Bei einer besonders bevorzugten Ausführungsform liegen auch das Reagenzienkarussell und das Probenkarussell auf unterschiedlichen Ebenen übereinander, wobei der Bereich, in dem die Reagenzienfächer angeordnet sind, und der Bereich, in dem die Probenfächer angeordnet sind, nicht überlappen. Bei Ausführungsformen mit einem Reagenzienkarussell und einem Probenkarussell, die auf unterschiedlichen Ebenen angeordnet sind, ist zwischen Reagenzienkarussell und Probenkarussell vorzugsweise eine wärmeisolierende Schicht vorgesehen, die ebenfalls auf der Unter- bzw. Oberseite eines der Karussells montiert sein kann oder eine separate um die Rotationsachse konzentrisch angeordnete Isolationsscheibe sein kann.

Das Analysatorkarussell im Sinne der Erfindung kann neben dem Reaktionsgefäßkarussell nur ein Karussell für Reagenzien aufweisen. Bei einem solchen Analysator werden dann die Proben in dem Analysator in anderer Form bereitgestellt oder können von außen zugeführt werden. Bei einer alternativen Ausführungsform ist neben dem Reaktionsgefäßkarussell nur ein Karussell für Proben vorgesehen. In diesem Fall werden die Reagenzien in einem anderen Bereich des Analysators bereitgestellt oder von außen zugeführt. Bei einer weiteren alternativen Ausführungsform weist der Analysator ein Karussell auf, in dem sowohl Bereiche für Reagenzienfächer als auch Bereiche für Probenfächer vorgesehen sind (kombiniertes Reagenzien-/Probenkarussell).

Bei einer besonders bevorzugten Ausführungsform können über einen Einschubschacht von außen einzelne Proben oder Reagenzien in den Arbeitsbereich des Pipettierarms eingebracht werden. Ein solcher Einschubschacht kann auch für solche Ausführungsformen vorgesehen sein, bei denen im Analysator bereits regulär Bereiche für Reagenzien und/oder Proben vorgesehen sind. Der Einschubschacht bietet in diesen Fällen die Möglichkeit nachträglich, d.h. während eines Analysendurchgangs Proben bzw. Reagenzien nachträglich in den Analysator einzubringen.

Bei einer Ausführungsform der Vorrichtung für die automatisierte Analyse von Flüssigkeiten mit einem Karussell für Flüssigkeitsbehälter können das Reagenzienkarussell und/oder das Probenkarussell bzw. das kombinierte Reagenzien-/Probenkarussell und das Reaktionsgefäßkarussell unabhängig voneinander um die gemeinsame Rotationsachse gedreht werden. Hierfür ist in dem Analysator eine entsprechend geeignete Antriebsvorrichtung vorgesehen. Bei einer bevorzugten Ausführungsform werden alle Teilkarussells des Gesamtkarussells über eine gemeinsame Antriebsvorrichtung gleichzeitig um die gemeinsame Rotationsachse gedreht.

Vorzugsweise besteht das Reaktionsgefäßkarussell aus einem gut wärmeleitenden Material. Besonders bevorzugt beträgt die Wärmeleitfähigkeit λ wenigstens 15 W/(m x K) (z. B. Edelstahl). Noch bevorzugter beträgt die Wärmeleitfähigkeit λ wenigstens 120 W/(m x K) (z. B. Messing). Insbesondere bevorzugt ist eine Wärmeleitfähigkeit λ von wenigstens 220 W/(m x K) (z. B. Aluminium).

Vorzugsweise besteht das Reaktionsgefäßkarussell aus einem Material mit geringer Wärmekapazität. Vorzugsweise beträgt die spezifische Wärmekapazität dieses Materials weniger als 1,0 J / (g K), noch bevorzugter weniger als 0,9 J / (g K).

Besonders bevorzugt besteht das Reaktionsgefäßkarussell im wesentlichen aus Aluminium. Bei speziellen Ausführungsformen besteht das Reaktionsgefäßkarussell vollständig aus Aluminium.

Das Reaktionsgefäßkarussell und damit das in den in dem Karussell angeordneten Reaktionsgefäßen enthaltene Reaktionsgemisch soll temperierbar sein. Bei einer Ausführungsform der Erfindung ist das Karussell so angeordnet, dass das Reaktionsgefäßkarussell in einem Bereich angeordnet ist, der durch eine Trennvorrichtung räumlich von dem Bereich abgetrennt ist, in dem das Reagenzien-/Probenkarussell angeordnet ist (siehe auch oben). Bei solchen Ausführungsformen kann die Temperierung des Reaktionsgefäßkarussells über ein Luftbad erfolgen.

Bei einer bevorzugten Ausführungsform erfolgt die Temperierung des Reaktionsgefäßkarussells über eine auf dem Reaktionsgefäßkarussell aufgebrachte Heizfolie oder einen Heizdraht (Widerstandsheizung). Besonders bevorzugt erfolgt die Energieversorgung dieser Heizfolie über einen zentralen Schleifkontakt zwischen dem Reaktionsgefäßkarussell und der Rotationsachse. Bei einer alternativen Ausführungsform ist an der Unterseite des Reaktionsgefäßkarussells oder am Außenumfang des Reaktionsgefäßkarussells ein peripherer Schleifkontakt vorgesehen, über den die für die Temperierung des Reaktionsgefäßkarussells erforderliche Energie zugeführt werden kann.

Um die Temperatur des Reaktionsgefäßkarussells gezielt steuern zu können, ist vorzugsweise am Reaktionsgefäßkarussell ein Temperatursensor vorgesehen, der mit einer entsprechenden Datenverarbeitungs- und Steuerungseinheit verbunden ist.

Wie eingangs bereits erwähnt weist die erfindungsgemäße Vorrichtung mit dem beschriebenen Flüssigkeitsbehälterkarussell eines oder mehrere Elemente unter einer Antriebsvorrichtung für das Karussell, einer Pipettiervorrichtung, einer Spülstation, einer wärmeerzeugenden Vorrichtung, einer kälteerzeugenden Vorrichtung, einer optischen Messvorrichtung zum Bestimmen einer physikalischen oder chemischen Größe des Reaktionsgemisches und einer optoelektronischen Lesevorrichtung zum Lesen eines optoelektronisch lesbaren Codes, der an dem oder an den Karussells und/oder auf den Proben- und/oder Reagenzien angebracht ist.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Weitere Merkmale oder Merkmalsgruppen sowie Beispiele für mögliche denkbare Merkmalskombinationen werden anhand der folgenden Beschreibung der beiliegenden Figuren offenbart bzw. veranschaulicht.

Hierbei zeigen:
- Figur 1: eine Vorrichtung für die automatisierte Analyse von Flüssigkeiten (Analysator) mit einem Karussell für Flüssigkeitsbehälter gemäß der vorliegenden Erfindung,
- Figur 2: eine schematische Darstellung eines erfindungsgemäßen Karussells für Flüssigkeitsbehälter in einer Seitenansicht und
- Figur 3: eine detaillierte Darstellung eines Karussells für Flüssigkeitsbehälter gemäß der vorliegenden Erfindung, in einer Schnittansicht durch die Drehachse des Karussells.

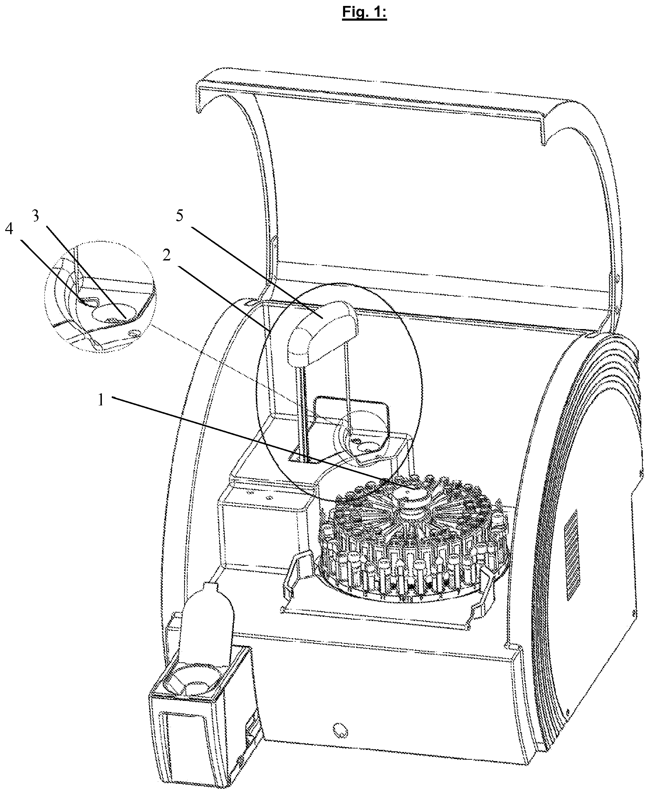

In Figur 1 ist eine Vorrichtung für die automatisierte Analyse von Flüssigkeiten (Analysator) dargestellt, die ein Karussell 1 für Flüssigkeitsbehälter und eine Pipettiervorrichtung 2 mit einem Pipettierarm 5 aufweist.

Das Karussell 1 ist im Bereich des Bodens des Analysators drehbar angeordnet und weist einen überlappenden Bereich mit dem Arbeitsbereich des Pipettierarms 5 auf. Auf diese Weise kann der Pipettierarm 5 mit der Pipettiernadel 27 in den Bereich gelangen, in dem in dem Karussell 1 Flüssigkeitsbehälter angeordnet sind.

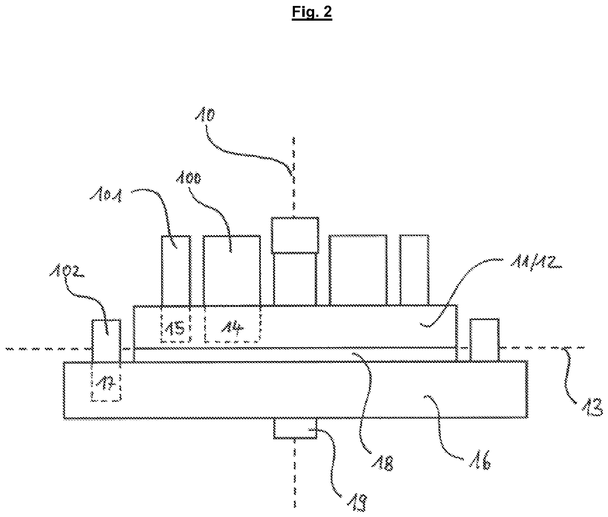

In der schematischen Darstellung von Figur 2 ist das erfindungsgemäße Karussell 1 in Seitenansicht dargestellt. Hierbei ist ein kombiniertes Reagenzien-/Probenkarussell 11/12 zu erkennen, in dem Reagenzienfächer 14 und Probenfächer 15 vorgesehen sind. In den Reagenzienfächern 14 sind Reagenzienbehälter 100 eingestellt und in den Probenfächern 15 sind Probenbehälter 101 eingestellt. Darüber hinaus ist ein Reaktionsgefäßkarussell 16 zu erkennen, in dem Reaktionsgefäßfächer 17 vorgesehen sind, in welche Reaktionsgefäße 102 eingestellt sind. Das Reaktionsgefäßkarussell 16 ist hierbei unter der Reagenzien-/Probenkarussellebene 13 angeordnet. Das kombinierte Reagenzien-/Probenkarussell und das Reaktionsgefäßkarussell haben eine kreisförmige Grundfläche und sind konzentrisch um die Rotationsachse 10 angeordnet. Auf der Rotationsachse 10 liegt auch die Zentralachse 19 des Karussells 1.

Zwischen dem Reagenzien-/Probenkarussell 11/12 und dem Reaktionsgefäßkarussell 16 ist eine wärmeisolierende Schicht 18 vorgesehen. Auf der Darstellung von Figur 2 ist außerdem zu erkennen, dass der Bereich, in dem im Reagenzien- und/oder Probenkarussell 11/12 die Reagenzien- und/oder Probenfächer 14/15 angeordnet sind, und der Bereich, in dem im Reaktionsgefäßkarussell 16 die Reaktionsgefäßfächer 17 angeordnet sind, nicht überlappen. In diesem besonderen Fall ist der Bereich, in dem im Reagenzien- und/oder Probenkarussell 11/12 die Reagenzien- und/oder Probenfächer 14/15 angeordnet sind, bezogen auf die Rotationsachse 10 zentral angeordnet. Dagegen ist der Bereich, in dem im Reaktionsgefäßkarussell 16 die Reaktionsgefäßfächer 17 angeordnet sind bezogen auf die Rotationsachse 10 außerhalb des zentralen Bereichs, in dem die Reagenzien-/Probenfächer angeordnet sind, vorgesehen.

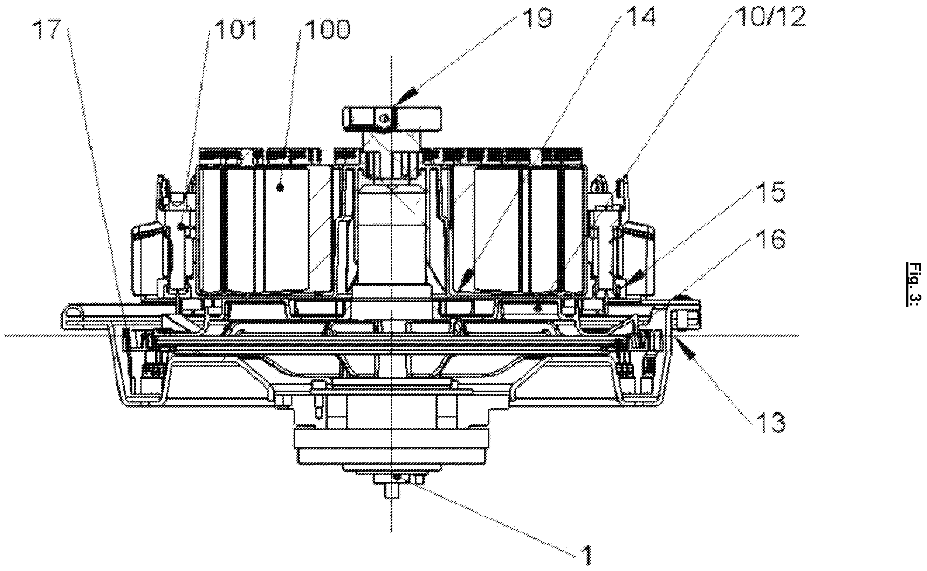

Figur 3 stellt eine spezielle Ausführungsform eines in einen Analysator eingesetzten Flüssigkeitsbehälterkarussells 1 dar. Hierfür wurde das Karussell 1 bestehend aus dem kombinierten Reagenzien-/Probenkarussell 11/12, einem Küvettenkarussell 16 und der dazwischen angeordneten Isolierscheibe 18 auf eine zentrale Welle 19 des Karussells 1 aufgesteckt und mit einem Schnellverschluss 103 gesichert. Unter dem Küvettenkarussell 16 ist zudem eine Basisplatte 1 vorgesehen, die von der in dem Analysator angeordneten Antriebsvorrichtung 105 in Drehbewegung versetzt werden kann. Darüber hinaus ist an dem Karussell 1 ein Schleifkontakt 106 vorgesehen, der mit einem entsprechenden Kontaktstelle im Analysator in Kontakt treten kann, um elektrische Energie vom Analysator zu empfangen, um damit das Küvettenkarussell zu temperieren.

### Bezugszeichen

- 1: Karussell für Flüssigkeitsbehälter
- 2: Pipettiervorrichtung
- 3: Spülstation
- 4: Meßvorrichtung für die Kapazitätsmessung
- 5: Pipettierarm
- 10: Rotationsachse
- 11: Reagenzienkarussell
- 12: Probenkarussell
- 13: Ebene, auf der Reagenzien- und/oder Probenkarussell liegen
- 14: Reagenzienfach
- 15: Probenfach
- 16: Reaktionsgefäßkarussell
- 17: Reaktionsgefäßfach
- 18: wärmeisolierende Schicht
- 19: zentrale Welle
- 27: Pipettiernadel
- 100: Reagenzienbehälter
- 101: Probenbehälter
- 102: Reaktionsgefäß
- 103: Schnellverschluss
- 104: Basisplatte
- 105: Antriebsvorrichtung
- 106: Schleifkontakt

## Patentansprüche

1. Karussell (1) für Flüssigkeitsbehälter für eine Vorrichtung für die automatisierte Analyse von Flüssigkeiten, wobei das Karussell (1) ein um die zentrale Rotationsachse (10) des Karussells (1) drehbares Reagenzien- und/oder Probenkarussell (11, 12) umfasst, wobei das Reagenzien-/Probenkarussell (11, 12) Reagenzien- und/oder Probenfächer (14, 15) zur Aufnahme von Reagenzien- und/oder Probenbehältern (100, 101) aufweist, **dadurch gekennzeichnet, dass** das Reagenzien- und/oder Probenkarussell ein kombiniertes Reagenzien-/Probenkarussell ist, in dem sowohl Bereiche für Reagenzienfächer als auch Bereiche für Probenfächer vorgesehen sind, und wobei das Karussell (1) zusätzlich ein konzentrisch um die Rotationsachse (10) angeordnetes Reaktionsgefäßkarussell (16) mit Reaktionsgefäßfächern (17) zur Aufnahme von Reaktionsgefäßen (102) aufweist, wobei zwischen dem kombinierten Reagenzien-/Probenkarussell (11, 12) und dem Reaktionsgefäßkarussell (16) eine wärmeisolierende Schicht (18) vorgesehen ist, und wobei das kombinierte Reagenzien-/Probenkarussell (11, 12) und das Reaktionsgefäßkarussell (16) physikalisch separate, aber lösbar miteinander verbindbare Elemente des Karussells (1) sind.

2. Karussell (1) nach Anspruch 1, **dadurch gekennzeichnet, dass** das Reaktionsgefäßkarussell unter oder über der Reagenzien-/Probenkarussellebene (13) angeordnet ist, wobei der Bereich, in dem im kombinierten Reagenzien-/Probenkarussell (11, 12) die Reagenzien- und Probenfächer (14, 15) angeordnet sind, und der Bereich, in dem im Reaktionsgefäßkarussell (16) die Reaktionsgefäßfächer (17) angeordnet sind, radial nicht überlappen.

3. Karussell (1) nach einem der Ansprüche 1 oder 2, **dadurch gekennzeichnet, dass** die wärmeisolierende Schicht (18) eine mit dem kombinierten Reagenzien-/Probenkarussell (11, 12) und dem Reaktionsgefäßkarussell (16) um die Rotationsachse (10) konzentrisch angeordnete Isolationsscheibe (18) ist.

4. Karussell (1) nach einem der Ansprüche 1 bis 3, **dadurch gekennzeichnet, dass** das kombinierte Reagenzien-/Probenkarussell (11, 12) und das Reaktionsgefäßkarussell (16) und die Isolationsscheibe (18) physikalisch separate aber lösbar miteinander verbindbare Elemente des Karussells (1) sind.

5. Karussell (1) nach einem der Ansprüche 3 bis 4, **dadurch gekennzeichnet, dass** das kombinierte Reagenzien-/Probenkarussell (11, 12), das Reaktionsgefäßkarussell (16) und die Isolationsscheibe (18) über eine gemeinsame Antriebsvorrichtung gleichzeitig um die gemeinsame Rotationsachse (10) gedreht werden können.

6. Karussell (1) nach einem der Ansprüche 1 bis 5, **dadurch gekennzeichnet, dass** die Wärmeleitfähigkeit λ der wärmeisolierenden Schicht höchstens 0,5 W/(m x K) beträgt.

7. Karussell (1) nach einem der Ansprüche 1 bis 5, **dadurch gekennzeichnet, dass** das Reaktionsgefäßkarussell (16) aus einem gut wärmeleitenden Material gefertigt ist.

8. Karussell (1) nach einem der Ansprüche 1 bis 7, **dadurch gekennzeichnet, dass** die Wärmeleitfähigkeit λ des Materials, aus dem das Reaktionsgefäßkarussell (16) gefertigt ist, wenigstens 80 W/(m x K) beträgt.

9. Karussell (1) nach einem der Ansprüche 1 bis 8, **dadurch gekennzeichnet, dass** das Reaktionsgefäßkarussell (16) über einen zentralen oder peripheren Schleifkontakt mit dem Analysator temperierbar ist.

10. Karussell (1) nach einem der Ansprüche 1 bis 9, **dadurch gekennzeichnet, dass** auf dem Reaktionsgefäßkarussell (16) eine Heizfolie vorgesehen ist.

11. Karussell (1) nach einem der Ansprüche 1 bis 10, **dadurch gekennzeichnet, dass** an dem Reaktionsgefäßkarussell (16) ein Temperatursensor vorgesehen ist.

12. Vorrichtung für die automatisierte Analyse von Flüssigkeiten mit einem Karussell für Flüssigkeitsbehälter (1) nach einem der Ansprüche 1 bis 11.

13. Vorrichtung für die automatisierte Analyse von Flüssigkeiten nach Anspruch 12 und mit einem oder mehreren Elementen unter einer Antriebsvorrichtung für das Karussell, einer Pipettiervorrichtung, einer Spülstation, einer Wärme erzeugenden Vorrichtung, einer Kälte erzeugenden Vorrichtung, einer optischen Messvorrichtung und einer optoelektronischen Lesevorrichtung zum Lesen eines optoelektronisch lesbaren Codes.

## Claims

1. Carousel (1) for liquid containers for a device for the automated analysis of liquids, wherein the carousel (1) comprises a reagent and/or sample carousel (11, 12) that is rotatable about the central axis of rotation (10) of the carousel (1), wherein the reagent/sample carousel (11, 12) has reagent and/or sample compartments (14, 15) for receiving reagent and/or sample containers (100, 101), **characterized in that** the reagent and/or sample carousel is a combined reagent/sample carousel, in which zones for reagent compartments as well as zones for sample compartments are provided, and wherein the carousel (1) additionally has a reaction vessel carousel (16), with reaction vessel compartments (17) for receiving reaction vessels (102), arranged concentrically about the axis of rotation (10), wherein a heat-insulating layer (18) is provided between the combined reagent and/or sample carousel (11, 12) and the reaction vessel carousel (16), and wherein the combined reagent/sample carousel (11, 12) and the reaction vessel carousel (16) are elements of the carousel (1) that are physically separate but which can be connected together detachably.

2. Carousel (1) according to claim 1, **characterized in that** the reaction vessel carousel is arranged above or below the reagent/sample carousel level (13), wherein the zone in which the reagent and/or sample compartments (14, 15) are arranged in the combined reagent and/or sample carousel (11, 12), and the zone in which the reaction vessel compartments (17) are arranged in the reaction vessel carousel (16), do not overlap radially.

3. Carousel (1) according to one of claims 1 or 2, **characterized in that** the heat-insulating layer (18) is an insulating disk (18) arranged concentrically with the combined reagent/sample carousel (11, 12) and the reaction vessel carousel (16) about the axis of rotation (10).

4. Carousel (1) according to one of claims 1 to 3, **characterized in that** the combined reagent/sample carousel (11, 12) and the reaction vessel carousel (16) and the insulating disk (18) are elements of the carousel (1) that are physically separate but which can be connected together detachably.

5. Carousel (1) according to one of claims 3 to 4, **characterized in that** the combined reagent/sample carousel (11, 12), the reaction vessel carousel (16) and the insulating disk (18) can be rotated simultaneously by a common driving mechanism about the common axis of rotation (10).

6. Carousel (1) according to one of claims 1 to 5, **characterized in that** the thermal conductivity A of the heat-insulating layer is at most 0.5 W/(m x K).

7. Carousel (1) according to one of claims 1 to 5, **characterized in that** the reaction vessel carousel (16) is made of a material that conducts heat well.

8. Carousel (1) according to one of claims 1 to 7, **characterized in that** the thermal conductivity A of the material from which the reaction vessel carousel (16) is made is at least 80 W/(m x K).

9. Carousel (1) according to one of claims 1 to 8, **characterized in that** the reaction vessel carousel (16) can be temperature-controlled by means of a central or peripheral sliding contact with the analyser.

10. Carousel (1) according to one of claims 1 to 9, **characterized in that** a heating foil is provided on the reaction vessel carousel (16).

11. Carousel (1) according to one of claims 1 to 10, **characterized in that** a temperature sensor is provided on the reaction vessel carousel (16).

12. Device for the automated analysis of liquids with a carousel for liquid containers (1) according to one of claims 1 to 11.

13. Device for the automated analysis of liquids according to claim 12 and with one or more of the following elements: a driving mechanism for the carousel, a pipetting device, a rinsing station, a device producing heat, a device producing cold, an optical measuring device and an optoelectronic reading device for reading an optoelectronically readable code.

## Revendications

1. Carrousel (1) pour récipients à liquides pour un dispositif destiné à l'analyse automatique de liquides, dans lequel le carrousel (1) comprend un carrousel pour réactifs et/ou échantillons (11, 12) qui peut tourner autour de l'axe de rotation central (10) du carrousel (1), le carrousel pour réactifs et/ou échantillons (11, 12) comportant des compartiments pour réactifs et/ou échantillons (14, 15) destinés à recevoir des récipients (100, 101) pour réactifs et/ou échantillons, **caractérisé en ce que** le carrousel pour réactifs et/ou échantillons est un carrousel combiné réactifs/ échantillons dans lequel sont prévues aussi bien des zones pour compartiments à réactifs que des zones pour compartiments à échantillons, et dans lequel le carrousel (1) comporte, en outre, un carrousel pour réacteurs (16) disposé concentriquement autour de l'axe de rotation (10), doté de compartiments pour réacteurs (17) destinés à recevoir des réacteurs (102), une couche thermo-isolante (18) étant prévue entre le carrousel combiné réactifs/échantillons (11, 12) et le carrousel pour réacteurs (16), et dans lequel le carrousel combiné réactifs/échantillons (11, 12) et le carrousel pour réacteurs (16) sont des éléments du carrousel (1) physiquement séparés mais pouvant être reliés entre eux de manière amovible.

2. Carrousel (1) selon la revendication 1, **caractérisé en ce que** le carrousel pour réacteurs est disposé au-dessous ou au-dessus du niveau (13) du carrousel pour réactifs/échantillons, la zone dans laquelle sont disposés les compartiments pour réactifs et échantillons (14, 15) dans le carrousel combiné réactifs/échantillons (11, 12) et la zone dans laquelle sont disposés les compartiments pour réacteurs (17) dans le carrousel pour réacteurs (16) ne se chevauchant pas radialement.

3. Carrousel (1) selon l'une des revendications 1 et 2, **caractérisé en ce que** la couche thermo-isolante (18) est un disque isolant (18) disposé concentriquement autour de l'axe de rotation (10) avec le carrousel combiné réactifs/échantillons (11, 12) et le carrousel pour réacteurs (16).

4. Carrousel (1) selon l'une des revendications 1 à 3, **caractérisé en ce que** le carrousel combiné réactifs/échantillons (11, 12) et le carrousel pour réacteurs (16) et le disque isolant (18) sont des éléments du carrousel (1) physiquement séparés mais pouvant être reliés entre eux de manière amovible.

5. Carrousel (1) selon l'une des revendications 3 à 4, **caractérisé en ce que** le carrousel combiné réactifs/échantillons (11, 12), le carrousel pour réacteurs (16) et le disque isolant (18) peuvent tourner simultanément autour de l'axe de rotation (10) commun par l'intermédiaire d'un dispositif d'entraînement commun.

6. Carrousel (1) selon l'une des revendications 1 à 5, **caractérisé en ce que** la conductivité thermique À de la couche thermo-isolante est au maximum de 0,5 W/(m x K).

7. Carrousel (1) selon l'une des revendications 1 à 5, **caractérisé en ce que** le carrousel pour réacteurs (16) est réalisé dans un matériau bon conducteur thermique.

8. Carrousel (1) selon l'une des revendications 1 à 7, **caractérisé en ce que** la conductivité thermique À du matériau dans lequel est réalisé le carrousel pour réacteurs est d'au moins 80 W/(m x K).

9. Carrousel (1) selon l'une des revendications 1 à 8, **caractérisé en ce que** le carrousel pour réacteurs (16) peut être tempéré, par l'intermédiaire d'un contact glissant central ou périphérique, avec l'analyseur.

10. Carrousel (1) selon l'une des revendications 1 à 9, **caractérisé en ce qu'**une feuille chauffante est prévue sur le carrousel pour réacteurs (16).

11. Carrousel (1) selon l'une des revendications 1 à 10, **caractérisé en ce qu'**un capteur de température est prévu sur le carrousel pour réacteurs (16).

12. Dispositif pour l'analyse automatique de liquides comprenant un carrousel pour récipients à liquides (1) selon l'une des revendications 1 à 11.

13. Dispositif pour l'analyse automatique de liquides selon la revendication 12 et comprenant un ou plusieurs éléments parmi un dispositif d'entraînement du carrousel, un dispositif de pipetage, une station de rinçage, un dispositif générateur de chaleur, un dispositif générateur de froid, un dispositif de mesure optique et un dispositif de lecture optoélectronique pour la lecture d'un code lisible de façon optoélectronique.
